# EUROPÄISCHE PATENTANMELDUNG

(11) **EP 4 582 645 A1**
(43) Veröffentlichungstag der Anmeldung: **09.07.2025**
(21) Anmeldenummer: 24221390.8
(22) Anmeldetag: 19.12.2024
(51) Int. Cl.: E04D 1/18, E04D 1/30, E04D 1/00, F24S 25/40, E04D 3/16, E04D 3/361

(54) **METALLDACHPLATTE**

(30) Priorität: 05.01.2024 AT 124 U
(71) Anmelder: ZK Vertriebs GmbH, 6800 Feldkirch (AT)
(72) Erfinder: Sommergut, Jonas, 6830 Rankweil (AT); Kühne, Philipp, 9492 Eschen (LI)
(74) Vertreter: Torggler & Hofmann Patentanwälte - Rankweil

(57) **Zusammenfassung**

Metalldachplatte (1) mit einer, insbesondere rechteckigen, Deckfläche (2) und auf zwei gegenüberliegenden Seiten der Deckfläche (2) ausgebildeten Auflageflächen (3,3') für Dachziegel (4), wobei zwischen der Deckfläche (2) und den Auflageflächen (3,3') jeweils ein über die Deckfläche (2), insbesondere rechtwinkelig, auskragender Verbindungsteg (5,5`)angeordnet ist und die Auflagefläche (3,3') jeweils auf dem, einem auskragenden Ende (16) des Verbindungsstegs (5, 5') gegenüberliegenden Ende (15) des Verbindungstegs (5,5') anschließt, wobei wenigstens bei einem Verbindungssteg (5,5') der Abstand (a) von der Auflagefläche (3,3') zum auskragenden Ende (16) des Verbindungsstegs (5,5') größer ist als der Abstand (b) von der Deckfläche (2) zum auskragenden Ende (16) des Verbindungsstegs (5,5').

## Beschreibung

Die Erfindung betrifft eine Metalldachplatte mit einer, insbesondere rechteckigen, Deckfläche und auf zwei gegenüberliegenden Seiten der Deckfläche ausgebildeten Auflageflächen für Dachziegel, wobei zwischen der Deckfläche und den Auflageflächen jeweils ein über die Deckfläche, insbesondere rechtwinkelig, auskragender Verbindungsteg angeordnet ist und die Auflagefläche jeweils auf dem, einem auskragenden Ende des Verbindungsstegs gegenüberliegenden Ende des Verbindungstegs anschließt.

Derartige Blechziegel sind an sich bekannt und dienen als Ersatz für einzelne Tonziegel im Tonziegeldach, beispielsweise bei der Montage von Photovoltaikanlagen oder bei der Herstellung von Dachdurchführungen.

Dazu stellt der Spengler in der Regel einen individuellen Blechziegel her, dessen Anschlüsse den Anschlüssen der im Tonziegeldach verwendeten Tonziegel nachempfunden sind. Es handelt sich dabei also jeweils um handgearbeitete Sonderanfertigungen, was sich neben dem erhöhten Materialverbrauch auch negativ auf die Produktionszeit und damit auch auf die Herstellungskosten auswirkt.

Zur Umgehung dieser Problematik führen deshalb Hersteller von Metalldachplatten unterschiedliche Metalldachplattentypen in ihrem Sortiment, die den gängigsten Tondachziegeln nachempfunden sind. So weist beispielsweise die Metalldachplatte Typ Vario 190 des Herstellers MARZARI eine Grundfläche mit auf zwei gegenüberliegenden Seiten ausgebildeten Stegen, die als Wassernasen dienen, auf, wobei sich auf beiden Seiten der Stege Auflageflächen für benachbarte Tonziegel anschließen. Diese spezielle Metalldachplatte ist als Ersatz für einen Bibertonziegel gedacht.

Wenngleich mit solchen vorab produzierten Metalldachplatten der Nachteil der Handanfertigung vor Ort vermieden werden kann, sind die bisher auf dem Markt erhältlichen Metalldachplatten in Folge der Nachahmung der Anschlüsse eines bestimmten Tondachziegels in ihrer Verwendung jeweils auf Dächer mit den speziellen Tondachziegeln eingeschränkt.

Ausgehend von diesem Stand der Technik hat es sich die Erfindung zur Aufgabe gemacht, eine neuartige Metalldachplatte anzugeben, die unter zumindest teilweiser Vermeidung der vorbeschriebenen Nachteile eine einfache Lösung hinsichtlich der Einsetzbarkeit der Metalldachplatte als Ersatz für verschiedene Tondachziegeltypen darstellt.

Zur Lösung dieser Aufgabe sieht die Erfindung vor, dass wenigstens bei einem Verbindungssteg der Abstand von der Auflagefläche zum auskragenden Ende des Verbindungsstegs größer ist als der Abstand von der Deckfläche zum auskragenden Ende des Verbindungsstegs.

Diese erfindungsgemäße Ausgestaltung ist besonders gut in einem Querschnitt durch die Metalldachplatte zu sehen.

Es hat sich zur Anpassung an unterschiedlichste Anschlüsse der zu ersetzenden Tondachziegel als vorteilhaft herausgestellt, dass bei beiden, auf den zwei gegenüberliegenden Seiten der Deckfläche angeordneten, Verbindungsstegen der, vorzugsweise bei beiden Verbindungsstegen gleichgroße, Abstand von der Auflagefläche zum auskragenden Ende des Verbindungsstegs größer ist als der Abstand von der Deckfläche zum auskragenden Ende des Verbindungsstegs.

Bevorzugt weist die erfindungsgemäße Metalldachplatte eine Deckfläche auf, an deren Längsseiten jeweils ein nach oben ragender Verbindungssteg ausgebildet ist, wobei sich an beiden Verbindungsstegen - von der Deckfläche betrachtet - jeweils nach außen eine Auflagefläche für einen benachbarten Tondachziegel erstreckt, wobei die Deckfläche einerseits und die Auflageflächen andererseits in, vorzugsweise parallelen, voneinander beabstandeten Ebenen verlaufen. Bevorzugt verlaufen die Auflageflächen dabei in derselben Ebene.

Dadurch, dass die erfindungsgemäße Metalldachplatte auf beiden Seiten der Deckfläche tiefer liegende Auflageflächen ausgebildet hat, stellt die Erfindung eine universell einsetzbare Metalldachplatte als Ersatz für verschiedenste Tondachziegel dar, weil die beidseits ausgeformten Auflageflächen mit unterschiedlichsten Tondachziegeltypen einen wind- und wetterbeständigen Anschluss bilden.

Dadurch, dass die Deckfläche und die Auflageflächen in unterschiedlichen Ebenen angeordnet sind, hängt die Einsatzmöglichkeit der Erfindung nicht wie bisher von der Ausformung der Anschlüsse ab, sondern ist lediglich durch die Breite der Deckfläche bzw. Auflageflächen bestimmt.

Um zu verhindern, dass das, zwischen den Verbindungsstegen und dem auf der Auflagefläche aufliegenden Dachziegel eintretende, Regenwasser über die Auflagefläche in die Dachkonstruktion eindringen kann, ist gemäß einer weiteren bevorzugten Variante der Erfindung vorgesehen, dass wenigstens eine der Auflageflächen, vorzugsweise beide Auflageflächen, in einem, dem Verbindungssteg gegenüberliegenden, Endbereich von einem, vorzugsweise in Richtung parallel zum Verbindungssteg über die jeweilige Auflagefläche überstehenden, Begrenzungssteg begrenzt ist bzw. sind.

Der Begrenzungssteg verhindert also, dass das Wasser über die Auflageflächen in die Lattung und auf die Dämmung gelangen kann, wofür es sich gemäß einem bevorzugten Ausführungsbeispiel der Erfindung als vorteilhaft herausgestellt hat, wenn der Begrenzungssteg mit der Auflagefläche einen Winkel von 70° bis 110°, vorzugsweise kleiner von 85° bis 95°, einschließt und/oder gewölbt ausgebildet ist.

Die Herstellung der erfindungsgemäßen Metalldachplatte ist auf kein bestimmtes Verfahren eingeschränkt. So sieht eine erste Ausführungsvariante der Erfindung vor, dass die Metalldachplatte mittels Druckumformung, vorzugsweise Strangpressen von Aluminium, hergestellt ist, während eine zweite Ausführungsvariante vorsieht, dass die Metalldachplatte mittels Biegeumformung, vorzugsweise einstückig, hergestellt ist.

Ist die Metalldachplatte mittels Biegeumformung hergestellt, sieht ein bevorzugtes Ausführungsbeispiel der Erfindung vor, dass sich auf den zwei gegenüberliegenden Seiten der Deckfläche je eine Verfalzung anschließt, wobei die Verfalzungen jeweils einen ersten Stehfalz, einen sich daran anschließenden Umschlag und einen sich an den Umschlag anschließenden zweiten Stehfalz aufweisen, wobei die Verbindungsstege jeweils vom ersten Stehfalz und dem sich daran anschließenden Umschlag und die Auflageflächen jeweils vom zweiten Stehfalz ausgebildet sind. Bevorzugt ist dann vorgesehen, dass die Verfalzungen jeweils einen sich an den zweiten Stehfalz anschließenden zweiten Umschlag oder dritten Stehfalz zur Ausbildung des jeweiligen Begrenzungsstegs aufweisen.

Erfindungsgemäße Metalldachplatten können einzeln aber vorzugsweise in Serie bzw. in größeren Stückzahlen vorgefertigt und so auf die Baustelle mitgenommen werden. Selbstverständlich ist es aber auch möglich, die erfindungsgemäße Metalldachplatte vor Ort durch einen Spengler herzustellen. In diesem Fall kommen vorteilhafterweise vorgeformte Metallbleche zum Einsatz, die den Erfordernissen hinsichtlich der Breite des zu ersetzenden Tondachziegels entsprechen. Obwohl sich das gesamte Erscheinungsbild nicht wesentlich ändert - bevorzugt sind auch bei manueller Herstellung die Auflageflächen und die Deckfläche, bevorzugt in parallelen, voneinander beabstandeten Ebenen angeordnet und durch einen auskragenden Verbindungssteg verbunden - so kann doch der Biegeprozess bei der Herstellung vor Ort auf der Baustelle anders als bei maschineller Vorfertigung sein. Beispielhaft sei dabei die Ausbildung des Verbindungssteges und der Auflagefläche angeführt. Während der Verbindungssteg und die Auflagefläche bei maschineller Vorfertigung jeweils der Abfolge von Stehfalz-Umschlag-Stehfalz entsprechen, können bei einer Herstellung vor Ort auf der Baustelle der Verbindungssteg und die Auflagefläche jeweils von einem doppelten Stehfalz der jeweils gebördelt und dann umgeschlagen wird, gebildet werden.

Unabhängig davon, wie die erfindungsgemäße Metalldachplatte hergestellt wird, besteht ein bevorzugtes Merkmal der Erfindung darin, dass die Verfalzungen an den Längsseiten bzw. die Endbereiche mit der Auflagefläche auf beiden Seiten der Metalldachplatte gleich ausgeformt sind.

Salopp ausgedrückt stellt die Erfindung also einen Universalblechdachziegel als Ersatz für Tondachziegel zur Verfügung, wobei eine möglichst große Zahl der auf dem Markt gängigen Tondachziegel mit der erfindungsgemäßen Metalldachplatte dann ersetzt werden können, wenn die Metalldachplatte zwischen 300 mm und 600 mm, vorzugsweise zwischen 350 mm und 500 mm, lang ist, und/oder der Abstand zwischen den beiden, vorzugsweise parallel verlaufenden, Verbindungsstegen zwischen 100 mm und 400 mm, vorzugsweise zwischen 150 mm und 300 mm, liegt und/oder die Auflageflächen zwischen 20 mm und 60 mm, vorzugsweise zwischen 35 mm und 45 mm, breit sind.

Ebenso können die meisten der aufgrund unterschiedlich starker Lattungen und Tondachziegel auftretenden Erfordernisse dann abgedeckt werden, wenn der Abstand von der Auflagefläche zum auskragenden Ende des Verbindungsstegs zwischen 10 mm und 30 mm, vorzugsweise zwischen 15 mm und 25 mm, beträgt und/oder der Abstand von der Deckfläche zum auskragenden Ende des Verbindungsstegs zwischen 1 mm und 29 mm, vorzugsweise zwischen 7 mm und 21 mm, beträgt.

Erhebungen der Anmelderin haben ergeben, dass die erfindungsgemäße Metalldachplatte bei 80% der möglichen, auf dem Markt befindlichen Dachvariationen von Tondachziegeln verwendet werden kann.

Eine materialersparende Variante für die Ausbildung des Begrenzungsstegs bei voller Aufrechterhaltung der Funktionalität wird gemäß einem weiteren Ausführungsbeispiel der Erfindung dann erreicht, wenn der Abstand von der Auflagefläche bis zum auskragenden Ende des Begrenzungsstegs zwischen 1 mm und 8 mm, vorzugsweise zwischen 2 mm und 7 mm, beträgt und/oder der Abstand vom Verbindungssteg bis zum auskragenden Ende des Begrenzungsstegs zwischen 1 mm und 59 mm, vorzugsweise zwischen 20 mm und 40 mm beträgt.

Auch wenn es grundsätzlich denkbar wäre, die beiden Auflageflächen für benachbarte Tonziegel unterschiedlich breit auszugestalten und somit die Variabilität bezüglich der Breite der zu ersetzenden Tondachziegel zu erhöhen, hat es sich für eine einfache und kostengünstige Vorfertigung sowie für ein gleichmäßiges Erscheinungsbild der eingesetzten Metalldachplatte als günstig herausgestellt, wenn die Metalldachplatte spiegelsymmetrisch ausgebildet ist. Anders ausgedrückt ist die erfindungsgemäße Metalldachplatte bezüglich einer zur Deckfläche in Längsrichtung normal verlaufenden Spiegelebene bevorzugt symmetrisch ausgebildet.

Eine besonders einfache Befestigungsmöglichkeit der erfindungsgemäßen Metalldachplatte auf der Dachlattung wird gemäß einer bevorzugten Variante dann erreicht, wenn die Metalldachplatte wenigstens eine, vorzugsweise in der Deckfläche angeordnete, Durchtrittsöffnung zum Befestigen der Metalldachplatte an einer Dachkonstruktion aufweist.

Um eine ausreichende und den Erfordernissen einer geschlossenen Dachhaut entsprechende Überlappung der Metalldachplatte mit dem in Falllinie unterhalb angeordneten Tondachziegel zu gewährleisten, ist gemäß einem bevorzugten Ausführungsbeispiel der Erfindung vorgesehen, dass sich in einem Endbereich der Deckfläche ein verformbares, vorzugsweise biegbares und/oder flexibles, Abdeckelement anschließt, wobei das, sich vorzugsweise zwischen den gegenüberliegenden Verbindungsstegen erstreckende, Abdeckelement über die Deckfläche hinausragt und an die Form eines Dachziegels anpassbar ist. Eine besonders einfache und kostengünstig herzustellende Lösung wird dabei dann erreicht, wenn das Abdeckelement aus Metall, vorzugsweise Bleiblech, hergestellt ist und, vorzugsweise mittels einer Verfalzung, formschlüssig mit der Metalldachplatte verbunden ist.

Weitere Einzelheiten und Vorteile der vorliegenden Erfindung werden anhand der nachfolgenden Figurenbeschreibung unter Bezugnahme auf die in der Zeichnung dargestellten Ausführungsbeispiele näher erläutert. Darin zeigt:
Fig. 1 einen Querschnitt durch ein erstes Ausführungsbeispiel einer erfindungsgemäßen Metalldachplatte;
Fig. 2a und 2b eine Draufsicht und einen Querschnitt durch ein zweites Ausführungsbeispiel der Erfindung;
Fig. 3 das Detail B aus Fig. 2b;
Fig. 4 einen Teilbereich des Schnitts AA` aus Fig. 2a;
Fig. 5a und 5b weitere Ausführungsbeispiele einer Verfalzung;
Fig. 6a und 6b Querschnitte einer Anordnung der erfindungsgemäßen Metalldachplatte zwischen zwei Dachziegeln und
Fig. 7a und 7b perspektivisch die Anordnung einer erfindungsgemäßen Metalldachplatte als Ersatz eines Tondachziegels in einem Tonziegeldach.

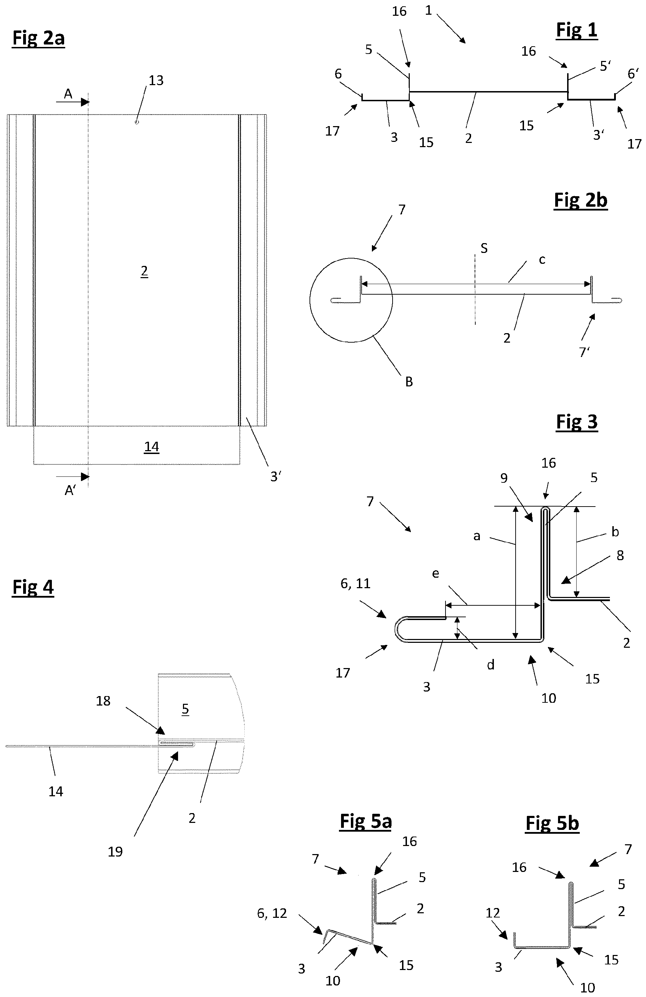

In Fig. 1 ist ein Querschnitt durch eine Metalldachplatte 1 gezeigt, die durch Strangpressen von Aluminium hergestellt wurde. Die Metalldachplatte 1 weist eine Deckfläche 2 auf, die im gezeigten Ausführungsbeispiel eben ausgebildet ist. Auch wenn die ebene Ausbildung des Deckfläche 2 generell bei verschiedensten Ausführungsvarianten bevorzugt ist, versteht es sich doch von selbst, dass die Deckfläche 2 ebenso gut nicht eben sondern z.B. konkav oder konvex gekrümmt ausgebildet sein kann. Auch andere Ausbildungsformen, die dem zu ersetzenden Tondachziegeln nachgeahmt sein können, sind möglich.

Auf beiden Seiten der Deckfläche 2 schließt jeweils ein Verbindungssteg 5, 5' an, der über die Deckfläche 2 auskragt, und somit mit seinem auskragenden Ende 16 über die Deckfläche 2 übersteht, und an dessen, der Auskragung 16 gegenüberliegenden Ende 15 sich jeweils eine Auflagefläche 3, 3' anschließt, die im Querschnitt betrachtet jeweils tiefer liegen, als die Deckfläche 2.

In anderen Worten bildet die der Deckfläche 2 zugewandte Seite des jeweiligen Verbindungssteges 5, 5' eine Innenseitenwand und die der Deckfläche 2 abgewandte Seite des jeweiligen Verbindungssteges 5, 5' eine Außenseitenwand, wobei die Höhe der Außenseitenwand größer ist als die Höhe der Innenseitenwand.

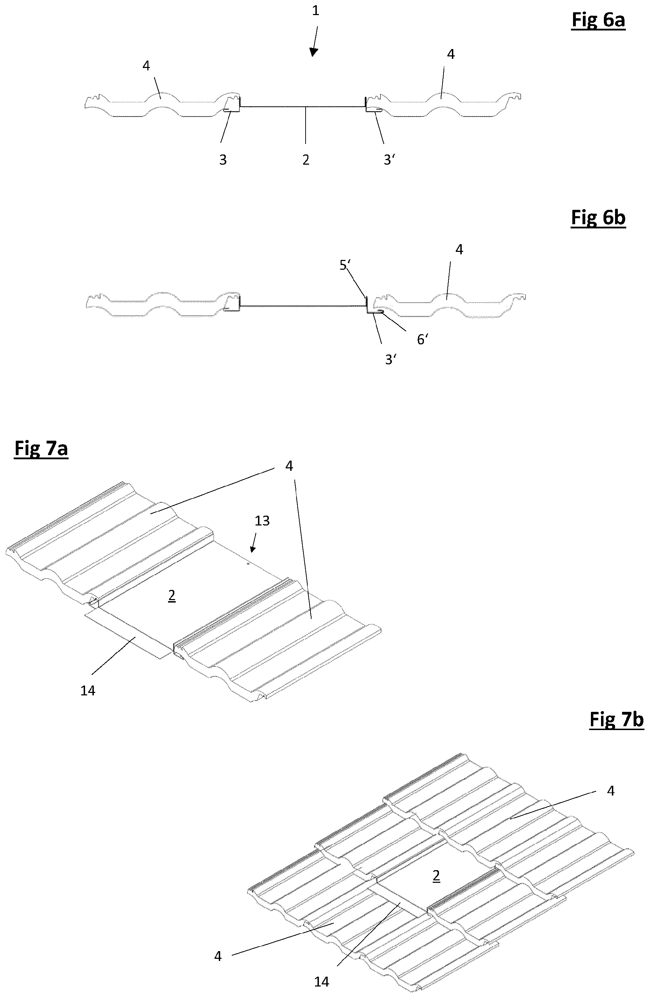

An die Auflageflächen 3, 3' schließt sich auf beiden Seiten, im jeweiligen, dem Verbindungssteg 5, 5' gegenüberliegenden Endbereich 17 jeweils ein in Richtung parallel zum Verbindungssteg 5, 5' über die jeweilige Auflagefläche 3, 3' überstehender Begrenzungssteg 6, 6' an. Diese Begrenzungsstege 6, 6' dienen dazu, den zwischen dem Verbindungssteg 5, 5' und dem Dachziegel 4 (Fig. 6b) eintretenden Niederschlag, wie z.B. Regenwasser, daran zu hindern, seitlich über die Auflagefläche 3, 3' in die Dachkonstruktion einzudringen.

Die Winkel zwischen dem jeweiligen Verbindungssteg 5, 5' und der Deckfläche 2, wie auch die Winkel zwischen dem jeweiligen Verbindungssteg 5, 5' und den jeweiligen Auflageflächen 3 , 3', wie auch die Winkel zwischen den jeweiligen Auflageflächen 3 , 3' und dem jeweiligen Begrenzungssteg 6, 6' betragen in diesem, wie auch in anderen bevorzugten Ausführungsbeispielen jeweils 90°. In diesem Zusammenhang sei aber darauf hingewiesen, dass sowohl die Verbindungsstege 5, 5' als auch die Begrenzungsstege 6, 6' mit der Deckfläche 2 bzw. mit der Auflagefläche 3, 3` einen anderen Winkel als einen orthogonalen Winkel (90°) einschließen können. Insbesondere ist jeweils der Winkelbereich zwischen 70° und 110° geeignet, den Erfindungsgedanken in einer praktikablen Lösung umzusetzen.

Ein zweites bevorzugtes Ausführungsbeispiel einer erfindungsgemäßen Metalldachplatte 1 ist in den Fig. 2a bis 4 dargestellt. Diese Metalldachplatte 1 wurde mittels Biegeumformung und, abgesehen vom Abdeckelement 14, aus einem einzigen Stück Blech hergestellt.

Aus der in Fig. 2a gezeigten Draufsicht ist ersichtlich, dass sich an die Deckfläche 2 auf beiden Seiten gleich ausgebildete Auflageflächen 3, 3' anschließen. Weiters weist die Metalldachplatte 1 in ihrem in Montagelage oberen Endbereich eine Durchtrittsöffnung 13 auf, die dazu dient, die Metalldachplatte 1 beispielsweise mittels eines Nagels oder einer Schraube an einer Traglattung zu befestigen. Auf dem gegenüberliegenden, in Falllinie unteren Bereich ist ein über die Deckfläche 2 hinausragendes Abdeckelement 14 angeordnet. Dieses Abdeckelement 14 ist beim gezeigten Ausführungsbeispiel aus Bleiblech hergestellt und dadurch an die Form des in Falllinie unter der Metalldachplatte 1 angeordneten Dachziegels 4 anpassbar.

Selbstverständlich sind auch andere Materialien zur Ausbildung des Abdeckelementes 14 geeignet, beispielsweise Polyvinylbutyral (PVB). Dieses Abdeckelement 14 dient einer sicheren Überdeckung und Abdeckung mit dem darunter liegenden Dachziegel 4.

Auch für die Herstellung der Metalldachplatte 1 selbst eignen sich unterschiedliche Metalle wie beispielsweise verzinktes Stahlblech, Kupfer oder Alublech.

Aus dem in Fig. 2b dargestellten Querschnitt ist ersichtlich, dass die Metalldachplatte 1 symmetrisch bezüglich der Spiegelebene S ausgebildet ist, wobei die Spiegelebene S parallel zu den Verbindungsstegen 5,5` verläuft.

In anderen Worten halbiert die Spiegelebene S die Metalldachplatte 1 in der Hälfte des Abstandes c zwischen den beiden Verbindungsstegen 5,5`, weil ja die beiden Verfalzungen 7, 7' auf beiden Seiten ident ausgebildet sind.

Aus Fig. 3 ist ersichtlich, dass die sich an die Deckfläche 2 anschließende Verfalzung 7 aus einem ersten Stehfalz 8, einem sich daran anschließenden Umschlag 9, einem sich an diesen Umschlag 9 anschließenden zweiten Stehfalz 10 und einem sich an den zweiten Stehfalz 10 anschließenden Umschlag 11 besteht. Der erste Stehfalz 8 bildet zusammen mit dem ersten Umschlag 9 den Verbindungssteg 5, während der zweite Stehfalz 10 die Auflagefläche 3 ausbildet. Der sich an dem zweiten Stehfalz 10 anschließende Umschlag 11 bildet den Begrenzungssteg 6.

In diesem Zusammenhang sei vermerkt, dass die Umschläge 9 und 11 nicht auf den dargestellten Winkelbereich von 180° beschränkt sind, sondern auch in einem Winkelbereich zwischen 135° und 180° liegen können.

Weiters ist ersichtlich, dass auch in diesem zweiten Ausführungsbeispiel der Abstand a von der Auflagefläche 3 und damit dem gegenüberliegenden Ende 15 des Verbindungssteges 5 bis zum auskragenden Ende 16 des Verbindungssteges 5, der der Länge des Umschlages 9 entspricht, größer ist als der Abstand b von der Deckfläche 2 bis zum auskragenden Ende 16 des Verbindungssteges 5, der der Länge des ersten Stehfalzes 8 entspricht.

Die Verfalzung 7' auf der anderen Seite der Deckfläche 2 ist bevorzugt analog bzw. spiegelsymmetrisch zur Verfalzung 7 ausgebildet.

Der sich aus der Differenz zwischen Abstand a und Abstand b ergebende Abstand von der jeweiligen Auflagefläche 5, 5' zur Deckfläche 2 beträgt erfindungsgemäß zwischen 1 mm und 9 mm, vorzugsweise zwischen 4 mm und 8 mm.

Bei der Wahl der passenden Abstände d und e soll in erster Linie darauf Bedacht genommen werden, dass die resultierende Verfalzung 7, 7` geeignet ist, eintretendes Regenwasser oder Schmelzwasser sicher in der Falllinie abzuleiten und zu verhindern, dass Wasser über die Verfalzung 7, 7` in die Dachkonstruktion eindringen kann.

Fig. 4 zeigt einen Teilbereich eines Schnitts entlang der Linie AA' aus Fig. 2a. Daraus ist ersichtlich, dass das, sich im Endbereich 18 der Deckfläche 2 an die Deckfläche 2 anschließende Abdeckelement 14 auf der Unterseite der Deckfläche 2, also der in Montagelage dem Dach zugewandten Seite der Metalldachplatte 1, formschlüssig, im dargestellten Ausführungsbeispiel mittels einer Verfalzung 19, angeordnet ist. Wie weit dieses Abdeckelement 14 über die Metalldachplatte 1 vorsteht, spielt keine erfindungswesentliche Rolle, es sollte jedenfalls ausreichend lang gewählt werden, um das Eindringen von Spritzwasser zwischen dem Dachziegel 4 und der sie überdeckenden Metalldachplatte 1 zu verhindern.

Bei der in Fig. 5a gezeigten, alternativen Ausführungsvariante einer Verfalzung 7 schließt der zweite Stehfalz 10 mit dem Umschlag 9 einen Winkel kleiner 90° ein, sodass die Auflagefläche 3 nicht parallel zur Deckfläche 2 verläuft, sondern mit dem Verbindungssteg 5 eine Rinne bildet. An den zweiten Stehfalz 10 schließt sich ein dritter Stehfalz 12 an, der bei dieser Ausführungsvariante nach unten gerichtet ist und somit eine Stütze für die Auflagefläche 3 bildet.

Bei der in Fig. 5b gezeigten, alternativen Ausführungsvariante schließt sich an den zweiten Stehfalz 10 nicht wie in Fig. 3 ein zweiter Umschlag 11 sondern ein dritter Stehfalz 12 als Begrenzungssteg 6 an. Im Unterschied zu Fig. 5a ist bei dieser Ausführungsvariante der dritte Stehfalz 12 jedoch nach oben auskragend ausgerichtet und bildet mit der hier wiederum zur Deckfläche 2 parallelen Auflagefläche 3 eine U-förmige Rinne für das eintretende Regen- und/oder Schmelzwasser.

In der Fig. 6a ist die erfindungsgemäße Metalldachplatte 1 zwischen zwei Dachziegeln 4 derart angeordnet, dass die Dachziegel 4 auf beiden Seiten auf den Auflageflächen 3, 3' aufliegen und mit ihren Seitenflächen direkt an den Verbindungsstegen 5, 5' anliegen. Von oben betrachtet, sind also nur die Verbindungsstege 5, 5' und die Deckfläche 2 der Metalldachplatte 1 sichtbar.

Hingegen ist bei der Variante nach Fig. 6b der im Bild rechte Dachziegel 4 vom Verbindungssteg 5' seitlich beabstandet. Diese Anordnung kann sich dann ergeben, wenn die Breite der erfindungsgemäßen Metalldachplatte 1 der Breite des zu ersetzenden Dachziegels 4 nicht ganz entspricht. Aber auch in diesem Fall erfüllt die erfindungsgemäße Metalldachplatte 1 die Erfordernisse einer geschlossenen Dachhaut zur Gänze, weil ja das in den verbleibenden Spalt zwischen dem Verbindungssteg 5' und dem Dachziegel 4 eintretende Regenwasser, Schmelzwasser oder dergleichen über die Auflagefläche 3' in Falllinie abtransportiert wird und der im Randbereich der Auflagefläche 3' ausgeformte Begrenzungssteg 6' ein Eintreten dieses Wassers in die Dachkonstruktion sicher verhindert.

Fig. 7a zeigt die Anordnung einer erfindungsgemäßen Metalldachplatte 1 als Ersatz für einen Dachziegel 4 in einer Reihe von Dachziegeln 4. Über die Durchtrittsöffnung 13 kann die Metalldachplatte 1 an der Traglattung befestigt werden und am gegenüberliegenden unteren Ende steht das Abdeckelement 14 vor.

Auf diese Weise kann das Abdeckelement 14, wie aus Fig. 7b ersichtlich, den in Falllinie darunter liegenden Dachziegel 4 abdecken, wodurch das Eintreten von Spritzwasser in die Dachkonstruktion sicher verhindert wird. Der in Falllinie oberhalb liegende Dachziegel 4 deckt die Durchtrittsöffnung 13 ab, sodass auch an dieser Stelle ein Eintreten von Wasser in die Dachkonstruktion sicher verhindert wird.

Die dargestellten Ausführungsbeispiele von Metalldachplatten 1 als Ersatz für Tondachziegel sowie die beschriebenen Beispiele möglicher Herstellungsverfahren sind selbstverständlich nicht in einschränkendem Sinne zu verstehen, sondern eben nur einzelne Beispiele von zahlreichen Möglichkeiten, den Erfindungsgedanken einer Metalldachplatte zu realisieren.

### Legende zu den Hinweisziffern:

- 1: Metalldachplatte
- 2: Deckfläche
- 3: Auflagefläche
- 3': Auflagefläche
- 4: Tondachziegel
- 5: Verbindungssteg
- 5': Verbindungssteg
- 6: Begrenzungssteg
- 7: Verfalzung
- 8: erster Stehfalz
- 9: erster Umschlag
- 10: zweiter Stehfalz
- 11: zweiter Umschlag
- 12: dritter Stehfalz
- 13: Durchtrittsöffnung
- 14: Abdeckelement
- 15: gegenüberliegendes Ende
- 16: auskragendes Ende
- 17: gegenüberliegender Endbereich
- 18: Endbereich
- 19: Verfalzung

## Patentansprüche

1. Metalldachplatte (1) mit einer, insbesondere rechteckigen, Deckfläche (2) und auf zwei gegenüberliegenden Seiten der Deckfläche (2) ausgebildeten Auflageflächen (3,3') für Dachziegel (4), wobei zwischen der Deckfläche (2) und den Auflageflächen (3,3') jeweils ein über die Deckfläche (2), insbesondere rechtwinkelig, auskragender Verbindungsteg (5,5`)angeordnet ist und die Auflagefläche (3,3') jeweils auf dem, einem auskragenden Ende (16) des Verbindungsstegs (5, 5') gegenüberliegenden Ende (15) des Verbindungstegs (5,5') anschließt, **dadurch gekennzeichnet, dass** wenigstens bei einem Verbindungssteg (5,5') der Abstand (a) von der Auflagefläche (3,3') zum auskragenden Ende (16) des Verbindungsstegs (5,5') größer ist als der Abstand (b) von der Deckfläche (2) zum auskragenden Ende (16) des Verbindungsstegs (5,5').

2. Metalldachplatte (1) nach Anspruch 1, **dadurch gekennzeichnet, dass** bei beiden, auf den zwei gegenüberliegenden Seiten der Deckfläche (2) angeordneten, Verbindungsstegen (5,5') der, vorzugsweise bei beiden Verbindungsstegen (5,5') gleichgroße, Abstand (a) von der Auflagefläche (3,3') zum auskragenden Ende (16) des Verbindungsstegs (5,5') größer ist als der Abstand (b) von der Deckfläche (2) zum auskragenden Ende (16) des Verbindungsstegs (5,5').

3. Metalldachplatte (1) nach Anspruch 1 oder 2, **dadurch gekennzeichnet, dass** wenigstens eine der Auflageflächen (3,3'), vorzugsweise beide Auflageflächen (3,3'), in einem, dem Verbindungssteg (5,5') gegenüberliegenden, Endbereich (17) von einem, vorzugsweise in Richtung parallel zum Verbindungssteg (5,5') über die jeweilige Auflagefläche (3,3') überstehenden, Begrenzungssteg (6,6') begrenzt ist bzw. sind.

4. Metalldachplatte (1) nach Anspruch 3, **dadurch gekennzeichnet, dass** der Begrenzungssteg (6,6') mit der Auflagefläche (3,3') einen Winkel von 70° bis 110°, vorzugsweise von 85° bis 95°, einschließt und/oder gewölbt ausgebildet ist.

5. Metalldachplatte (1) nach einem der Ansprüche 1 bis 4, **dadurch gekennzeichnet, dass** die Metalldachplatte (1) mittels Druckumformung, vorzugsweise Strangpressen von Aluminium, hergestellt ist.

6. Metalldachplatte (1) nach einem der Ansprüche 1 bis 4, **dadurch gekennzeichnet, dass** die Metalldachplatte (1) mittels Biegeumformung, vorzugsweise einstückig, hergestellt ist.

7. Metalldachplatte (1) nach Anspruch 6, **dadurch gekennzeichnet, dass** sich auf den zwei gegenüberliegenden Seiten der Deckfläche je eine Verfalzung (7,7'') anschließt, wobei die Verfalzungen (7,7") jeweils einen ersten Stehfalz (8), einen sich daran anschließenden Umschlag (9) und einen sich an den Umschlag (9) anschließenden zweiten Stehfalz (10) aufweisen, wobei die Verbindungsstege (5,5') jeweils vom ersten Stehfalz (8) und dem sich daran anschließenden Umschlag (9) und die Auflageflächen (3,3') jeweils vom zweiten Stehfalz (10) ausgebildet sind.

8. Metalldachplatte (1) nach Anspruch 7, **dadurch gekennzeichnet, dass** die Verfalzungen (7,7') jeweils einen sich an den zweiten Stehfalz (10) anschließenden zweiten Umschlag (11) oder dritten Stehfalz (12) zur Ausbildung des jeweiligen Begrenzungsstegs (6,6`) aufweisen.

9. Metalldachplatte (1) nach einem der Ansprüche 1 bis 8, **dadurch gekennzeichnet, dass** die Metalldachplatte (1) zwischen 300 mm und 600 mm, vorzugsweise zwischen 350 mm und 500 mm, lang ist.

10. Metalldachplatte (1) nach einem der Ansprüche 1 bis 9, **dadurch gekennzeichnet, dass** ein Abstand (c) zwischen den beiden, vorzugsweise parallel verlaufenden, Verbindungsstegen (5,5') zwischen 100 mm und 400 mm, vorzugsweise zwischen 150 mm und 300 mm, beträgt.

11. Metalldachplatte (1) nach einem der Ansprüche 1 bis 10, **dadurch gekennzeichnet, dass** die Auflageflächen (3,3') zwischen 20 mm und 60 mm, vorzugsweise zwischen 35 mm und 45 mm, breit sind.

12. Metalldachplatte (1) nach einem der Ansprüche 1 bis 11, **dadurch gekennzeichnet, dass** die Metalldachplatte (1) spiegelsymmetrisch ausgebildet ist.

13. Metalldachplatte (1) nach einem der Ansprüche 1 bis 12, **dadurch gekennzeichnet, dass** die Metalldachplatte (1) wenigstens eine, vorzugsweise in der Deckfläche (2) angeordnete, Durchtrittsöffnung (13) zum Befestigen der Metalldachplatte (1) an einer Dachkonstruktion aufweist.

14. Metalldachplatte (1) nach einem der Ansprüche 1 bis 13, **dadurch gekennzeichnet, dass** sich in einem Endbereich (18) der Deckfläche (2) ein verformbares, vorzugsweise biegbares und/oder flexibles, Abdeckelement (14) anschließt, wobei das, sich vorzugsweise zwischen den gegenüberliegenden Verbindungsstegen (5,5') erstreckende, Abdeckelement (14) über die Deckfläche (2) hinausragt und an die Form eines Dachziegels (4) anpassbar ist.

15. Metalldachplatte (1) nach Anspruch 14, **dadurch gekennzeichnet, dass** das Abdeckelement (14) aus Metall, vorzugsweise Bleiblech, hergestellt ist und, vorzugsweise mittels einer Verfalzung (15), formschlüssig mit der Metalldachplatte (1) verbunden ist.
